# EUROPÄISCHE PATENTSCHRIFT

(11) **EP 1 935 860 B1**
(45) Veröffentlichungstag und Bekanntmachung des Hinweises auf die Patenterteilung: **04.04.2012**
(21) Anmeldenummer: 07122827.4
(22) Anmeldetag: 11.12.2007
(51) Int. Cl.: C04B 26/06, C04B 28/02, C04B 40/06, C08K 5/13, C04B 28/14, C04B 28/06, C08L 33/06

(54) **Zweikomponenten-Reaktionsharz und seine Verwendung**
Two-component thermosetting resin and its use
Résine réactive à deux composants et son utilisation

(30) Priorität: 21.12.2006 DE 102006060732
(43) Veröffentlichungstag der Anmeldung: 25.06.2008
(73) Patentinhaber: HILTI Aktiengesellschaft, 9494 Schaan (LI)
(72) Erfinder: Kumru, Emin-Memet, 86199, Augsburg (DE); Bürgel, Thomas, 86899, Landsberg am Lech (DE); Pfeil, Armin, 86916, Kaufering (DE)
(74) Vertreter: Wildi, Roland

(56) Entgegenhaltungen:
- WO-A1-94/04583
- DE-A1- 10 212 067

## Beschreibung

Gegenstand der vorliegenden Erfindung ist ein Zweikomponenten-Reaktionsharz, mit einer Harzkomponente (A), die als härtbaren Bestandteil (a) mindestens eine radikalisch härtbare, ethylenisch ungesättigte Verbindung und ein Mittel (b) für die Einstellung der Reaktivität und der Gelzeit sowie vorzugsweise einen Beschleuniger für das Härtungsmittel enthält, und einer davon reaktionsinhibierend getrennt angeordneten Härterkomponente (B), die ein Härtungsmittel für das Harz der Harzkomponente (A) enthält, sowie seine Verwendung zur chemischen Befestigung von Ankergewindestangen, Bewehrungseisen, Gewindehülsen und Schrauben in Bohrlöchern.

Zweikomponenten-Reaktionsharze, namentlich vorbeschleunigte Methacrylatharze das heißt Reaktionsharze, die einen Beschleuniger für das Härtungsmittel enthalten, bedürfen des Zusatzes von Stabilisatoren, um ein unerwünschtes vorzeitiges Polymerisieren während der Lagerung zu vermeiden. Bei diesen Stabilisatoren handelt es sich üblicherweise um unterschiedliche Verbindungen, welche den radikalisch härtbaren, ethylenisch ungesättigten Verbindungen der Harzkomponente in Mengen von 20 ppm bis 1000 ppm zugesetzt werden. Einige dieser Stabilisatoren lassen sich auch zur Einstellung der Gelzeit, das heißt zu einer gezielten Verzögerung des Starts der Polymerisation nach dem Vermischen der den Beschleuniger enthaltenden Harzkomponente mit der Härterkomponente, verwenden. Allerdings müssen hierzu die Mengen der Stabilisatoren in Abhängigkeit von der angestrebten Gelzeit deutlich auf bis zu 5000 ppm und mehr erhöht werden. Als Stabilisatoren dieser Art werden üblicherweise phenolische Verbindungen eingesetzt, wie Hydrochinon, p-Methoxyphenol, 4-tert.-Butylbrenzcatechin, 2,6-Ditert.-butyl-4-methylphenol oder 2,4-Dimethyl-6-tert.-butylphenol. DE 10212067 und WO94/04583 zum Beispiel offenbaren Zweikomponenten-Reaktionsharze enthaltend tert-butylbrenzcatechin.

Diese phenolischen Verbindungen, vor allem jene, welche sich aufgrund ihrer Reaktivität besonders gut als Inhibitor für die vorzeitige Polymerisation der angesprochenen Reaktionsharze eignen, besitzen den Nachteil, daß sie durch Luftsauerstoff, insbesondere in Gegenwart alkalischer Medien, also beispielsweise alkalisch wirkenden Füllstoffen, wie Zement, deaktiviert werden, was während der Lagerung eines entsprechend inhibierten Systems zum schleichenden Verlust der inhibierenden Wirkung führt. Dies hat zur Folge, daß die Gelzeit auf unakzeptabel kurze Zeiten absinkt, ein Vorgang, den der Fachmann als Gelzeitdrift bezeichnet.

Zur Verhinderung eines solchen Gelzeitdrifts schlägt die DE 195 31 649 A1 vor, den eigentlich hervorragend geeigneten Inhibitor 4-tert.-Butylbrenzcatechin durch einen gelzeitstabilen Inhibitor zu ersetzen, wie Piperidinyl-N-oxyl oder Tetrahydropyrrol-N-oxyl. Allerdings hat sich gezeigt, daß diese Inhibitoren zu einer überproportional starken Inhibierung der Polymersationsreaktion bei tiefen Temperaturen führen und diese Inhibitoren enthaltende Reaktionsharze einer starken Oberflächeninhibierung durch Luftsauerstoff unterliegen, was zu einer ungenügenden Robustheit der Aushärtung führt.

Sterisch gehinderte Phenole, wie 2,6-Ditert.-butyl-4-methylphenol und 2,4-Dimethyl-6-tert,-butylphenol verhalten sich zwar deutlich stabiler im Hinblick auf die Gelzeit und führen auch zu einer geeigneten Inhibierung der Polymerisation bei Raumtemperatur. Jedoch ist bei tiefen Temperaturen die Qualität des ausgehärteten Harzes und damit die Auszugsfestigkeit eines mit Hilfe eines solchen inhibierten Reaktionsharzes gesetzten Dübels unbefriedigend. Weiterhin ist festzustellen, daß die Mehrzahl der als Stabilisatoren eingesetzten Verbindungen sich überhaupt nicht als Inhibitoren eignet.

Weitere Ansätze zur Lösung des Problems des Gelzeitdrifts, wie die Behandlung der Reaktionsharze mit unlöslichen organischen Säuren, Aminsalzen, Aminbeschleunigern, Titankomplex-Additiven und stabilen Radikalinhibitoren haben sich ebenfalls nicht als zufriedenstellend erwiesen. Keiner dieser vorbekannten Lösungsansätze führt demzufolge zu einer befriedigenden Gelzeitstabilität des Reaktionsharzes, vor allem in Gegenwart von Zement oder anderen alkalisch reagierenden Substanzen als Füllstoffe.

Die der vorliegenden Erfindung zugrunde liegenden Aufgabe besteht also darin, gelzeitstabile Inhibitoren für die freie radikalische Polymerisation der eingangs angegebenen Zweikomponenten-Reaktionsharze, insbesondere auf der Grundlage von Methacrylatharzen anzugeben, die unter anderem mit Zement oder anderen alkalisch wirkenden Füllstoffen gefüllt sind, und welche einerseits die Stabilität der Gelzeit während der Lagerung solcher Reaktionsharze sicherstellen, wie sie beispielsweise mit den aus der DE 195 31 649 A1 bekannten Inhibitoren erreicht werden kann, und andererseits die Reaktivität, Robustheit und Qualität der Aushärtung auch bei tiefen Temperaturen sicherstcllen, wie sie mit dem Inhibitor 4-tert.-Butylbrenzcatechin erreichbar sind.

Es hat sich gezeigt, daß diese Aufgabe durch die Verwendung bestimmter Brenzcatechin-Derivate als Mittel für die Einstellung der Reaktivität und der Gelzeit gelöst werden kann.

Es hat sich überraschenderweise erwiesen, daß beim Austausch des stark aktivierenden tert.-Butylrests von 4-tert.-Butylbrenzcatechin durch weniger stark aktivierende Reste eine ausreichende Inhibitorqualität bei signifikant geringerem Gelzeitdrift erreicht werden kann und daß unerwarteterweise auch das hohe Leistungsniveau und die Robustheit der erfindungsgemäßen Zweikomponenten-Reaktionsharze auch bei tiefen Aushärtetemperaturen erzielt werden kann.

Gegenstand der Erfindung ist daher das Zweikomponenten-Reaktionsharz gemäß Anspruch 1. Die Unteransprüche betreffen bevorzugte Ausführungsformen dieses Reaktionsharzes, dieses enthaltende Patronen, Kartuschen und/oder Folienbeutel und seine Verwendung zur chemischen Befestigung von Ankergewindestangen, Bewehrungseisen, Gewindehülsen und Schrauben in Bohrlöchern.

Die Erfindung betrifft somit ein Zweikomponenten-Reaktionsharz, mit einer Harzkomponente (A), die als härtbaren Bestandteil (a) mindestens eine radikalisch härtbare, ethylenisch ungesättigte Verbindung, ein Mittel (b) für die Einstellung der Reaktivität und der Gelzeit und mindestens ein Comonomer (c) enthält, und einer davon reaktionsinhibierend getrennt angeordneten Härterkomponente (B), die ein Härtungsmittel für das Harz der Harzkomponente (A) enthält, das dadurch gekennzeichnet ist, daß die Harzkomponente (A) als Mittel (b) für die Einstellung der Reaktivität und der Gelzeit ein Brenzcatechinderivat der allgemeinen Formel (I): 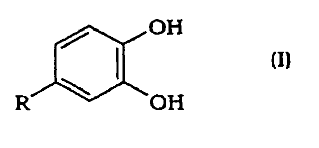 enthält, in der R ein Wasserstoffatom, eine gegebenenfalls hydroxy-, alkoxy-oder alkylamino-substituierte Methyl-, Ethyl-, n-Propyl-, iso-Propyl-, n-Butyl-oder iso-Butylgruppe, eine Gruppe der Formeln R₁OOC-, R₁O-, R₁NH- oder R₁R₂N-, worin R₁ und R₂ unabhängig voneinander gegebenenfalls hydroxysubstituierte Alkylgruppen mit 1 bis 4 Kohlenstoffatomen darstellen, eine Aldehydgruppe, eine Polyoxyalkylengruppe der Formel (II): 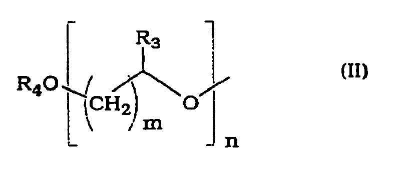 in der m eine ganze Zahl mit einem Wert von 1 bis 3, n eine ganze Zahl mit einem Wert von 1 bis 50, R₃ ein Wasserstoffatom oder eine Methylgruppe und R₄ ein Wasserstoffatom, eine Alkylgruppe mit 1 bis 4 Kohlenstoffatomen oder eine Gruppe der Formel (III): 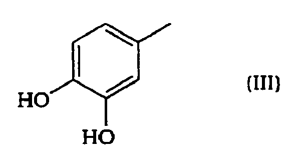 darstellen, bedeutet.

Vorzugsweise enthält die Harzkomponente (A) als Mittel (b) für die Einstellung der Reaktivität und der Gelzeit Brenzcatechin, 3,4-Dihydroxybenzaldehyd, 4-Methylbrenzcatechin und/oder 4-Methoxybrenzcatechin.

Das Mittel (b) für die Einstellung der Reaktionszeit und der Gelzeit, nachfolgend auch als Inhibitor bezeichnet, wird vorzugsweise in einer Menge von 100 ppm bis 2,0 Gew.-%, bevorzugter von 500 ppm bis 1,5 Gew.-% und noch weiter bevorzugt von 1000 ppm bis 1,0 Gew.-%, bezogen auf den härtbaren Bestandteil (a) in der Harzkomponente (A) gelöst, eingesetzt,

Gemäß einer bevorzugten Ausführungsform der Erfindung enthält die Harzkomponente (A) als härtbaren Bestandteil (a) mindestens einen Vinylester der Formel (A-CH=CR₅-CO-O)ₙ-R, einen Vinylether der Formel (A-CH=CR₅-O)ₙ-R, einen Allylester der Formel (CH₂=CR₅-CH₂-CO-O)ₙ-R, einen Allylether der Formel (CH₂=CR₅-CH₂-O)ₙ-R, ein Vinylesterharz auf Grundlage von Bisphenol A, ein Vinylesterurethan-Harz oder ein Oligomer oder Prepolymer aus einem oder mehreren dieser Monomeren enthält, worin A gleichartige oder verschiedene Wasserstoffatome oder Alkylgruppen mit 1 bis 3 Kohlenstoffatomen, R eine geradkettige oder verzweigte aliphatische Gruppe mit 1 bis 20 Kohlenstoffatomen, die auch eine Cyclohexyl- oder 1,4-Dimethylencyclohexylgruppe und ein oder mehrere Sauerstoff- oder Schwefel-Atome enthalten und mit einer oder mehreren funktionellen Gruppen, ausgewählt aus Hydroxygruppen und Aminogruppen und ein oder zwei Alkylgruppen mit 1 bis 3 Kohlenstoffatomen, substituiert sein kann, eine Allylgruppe oder eine Vinylgruppe, oder R eine Polyethylenglykol- oder Polypropylenglykolgruppe mit einer mittleren Kettenlänge von 2 bis 120 Glykoleinheiten, die gegebenenfalls eine an die freie Hydroxylgruppe der Kette gebundene aliphatische Gruppe mit 1 bis 5 Kohlenstoffatomen aufweist, R₅ Wasserstoff oder eine Alkylgruppe mit 1 bis 8 Kohlenstoffatomen und n 1, 2, 3 oder 4 bedeuten.

Erfindungsgemäß besonders bevorzugte härtbare Bestandteile (a) sind Hydroxybutylvinylether, Diethylenglykoldivinylether, Triethylenglykoldivinylether, 3-Aminopropylvinylether, t-Amylvinylether, Butylvinylether, Cyclohexandimethanolmonovinylether, Cyclohexylvinylether, 3-Diethylaminopropylvinylether, Diethyleneglykolmonovinylether, Dodecyl-vinylether, Ethylenglykolbutylvinylether, Ethyleneglykolmonovinylether, 2-Ethylhexylvinylether, Ethylvinylether, Hexanediolmonovinylether, Hydroxybutylvinylether, Methylvinylether, Octadecylvinylether, Polyethylenglykol-520-methylvinylether, Triethylenglykcolmethylvinylether, Butandioldivinylether. Cyclohexandimethanol-divinylether, Diethylenglykoldivinylether, Dipropylenglykoldivinylether, Ethylenglykoldivinylether, Hexandioldivinylether, Neopentylglykoldivinylether, Tetraethylenglykoldivinylether, Triethylenglykoldivinylether, Trimethylolpropantrivinylether, Tripropylenglykoldivinylether, Pentaerythrittetravinylether, Allylether, Di(propylenglykol)allylether(meth)acrylat (Isomerenmischung), Diethylenglykolmonoallylether, Pentaerythritlallylether, Trimethylolpropanallylether, Trimethylolpropandiallylether, Allylbenzylether, Bisphenol-A-diallylether, Allylbutylether, Allylethylether, Allylglycidylether, Allylphenylether, Allylpropylether, Poly(epichlorohydrin-co-ethylenoxid-co-allylglycidylether), Ethylenglykolmonoallylether, Tetraethylenglykoldiallylether, ethoxyliertes Bisphenol-A-di(meth)acrylat mit einem Ethoxylierungsgrad von 2 bis 10, vorzugsweise von 2 bis 4, difunktionellen, trifunktionellen oder höherfunktionellen Urethan(meth)acrylat-Oligomeren oder Mischungen dieser härtbaren Bestandteile.

Vorzugsweise enthält die Harzkomponente (A) als Comonomer (c) einen (Meth)acrylsäureester. Erfindungsgemäß als Comonomere (c) besonders bevorzugte (Meth)acrylsäureester werden ausgewählt aus Hydroxypropyl(meth)acrylat, Butandiol-1,2-di(meth)acrylat, Trimethylolpropantri(meth)-acrylat, 2-Ethylhexyl(meth)acrylat, Phenylethyl-(meth)acrylat, Tetrahydrofurfuryl(meth)acrylat. Ethyltriglykol(meth)-acrylat, N.N-Dimethylaminoethyl-(meth)acrylat, N,N-Dimethylaminomethyl(meth)-acrylat, 1,4-Butandioldi(meth)acrylat, Acetoacetoxyethyl-(meth)acrylat, 1,2-Ethandioldi(meth)acrylat, Isobornyl(meth)acrylat, Diethylenglykoldi(meth)acrylat, Methoxypolyethylenglykolmono(meth)acrylat, Trimethyl-cyclohexyl(meth)acrylat, 2-Hydroxyethyl(meth)acrylat. Dicyclopentenyloxyethyl(meth)acrylat und/oder Tricyclopentadienyldi(meth)acrylat, Bisphenol-A-(meth)acrylat, Novolakepoxidi(meth)-acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}- decan, 3-Methylecyclopentadienyl(meth)acrylat. Isobornyl(meth)acrylat und Decalyl-2-(meth)-acrylat.

Die zur Bezeichnung der härtbaren Bestandteile (a) und der Comonomeren (c) verwendete Nomenklatur "...(meth)acryl..." bedeutet, daß mit diesen Bezeichnungen sowohl die "...methacryl..." also auch die "...acryl..." Verbindungen umfaßt sein sollen.

Gemäß einer besonders bevorzugten Ausführungsform der Erfindung liegt die Harzkomponente (A) in vorbeschleunigter Form vor, das heißt sie enthält einen Beschleuniger (d) für das Härtungsmittel, weil gerade für diese bevorzugte Ausführungsform der Erfindung das Mittel (b) für die Einstellung der Reaktivität und der Gelzeit des Reaktionsharzes sich als besonders wirksam erwiesen hat. Bevorzugte Beschleuniger (d) für das Härtungsmittel sind aromatische Amine und/oder Salze von Kobalt, Mangan, Zinn, Vanadium oder Cer. Besonderes vorteilhaft haben sich als Beschleuniger (d) N,N-Dimethylanilin, N,N-Diethylanilin, N,N-Di-isopropanol-p-toluidin, N,N-Diisopropyliden-p-toluidin, N,N-Dimethyl-p-toluidin, N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthenat, Vanadium(IV)-acetylacetonat und Vanadium(V)-acetylacetonat erwiesen.

Gemäß einer weiter bevorzugten Ausführungsform der Erfindung enthält die Harzkomponente (A) und/oder die Härterkomponente (B) mindestens einen anorganischen Füllstoff, wie vorzugsweise Quarz, Glas, Korund, Porzellan, Steingut, Schwerspat, Leichtspat, Gips, Talkum, Kreide oder Mischungen davon, wobei diese Füllstoffe in Form von Sanden, Mehlen oder Formkörpern, namentlich in Form von Fasern oder Kugeln enthalten sein können.

Die Härterkomponente (B) des erfindungsgemäßen Zweikomponenten-Reaktionsharzes enthält als Härtungsmittel mindestens ein organisches Peroxid, vorzugsweise Dibenzoylperoxid, Methylethylketonperoxid, tert.-Butylperbenzoat. Cyclohexanonperoxid, Laurylperoxid, Cumolhydroperoxid und/oder tert.-Butylperoxy-2-ethylhexanoat.

Erfindungsgemäß besonders bevorzugt sind Zweikomponenten-Reaktionsharze, die in der Harzkomponente (A) neben dem Harz zusätzlich noch eine hydraulisch abbindende oder polykondensierbare anorganische Verbindung und die Härterkomponente (B) neben dem Härtungsmittel zusätzlich noch Wasser enthält.

Dabei enthält die Harzkomponente (A) vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die Harzkomponente (A) kann als polykondensierbare anorganische Verbindung auch silikatische, polykondensierbare Verbindungen, insbesondere lösliches, gelöstes und/oder amorphes Siliziumdioxid enthaltende Stoffe umfassen.

Ein weiterer Gegenstand der Erfindung ist eine Patrone, eine Kartusche oder ein Folienbeutel, die ein Zweikomponenten-Reaktionsharz der oben beschriebenen Art enthält, die, beziehungsweise der, zwei oder mehrere voneinander getrennte Kammern umfaßt, in welchen die Harzkomponente (A) beziehungsweise die Härterkomponente (B) reaktionsinhibierend getrennt voneinander enthalten sind. Bei der bestimmungsgemäßen Verwendung des erfindungsgemäßen Zweikomponenten-Reaktionsharzes werden die Harzkomponente (A) und die Härterkomponente (B) entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen in das mit dem aushärtenden Reaktionsharz beschickte Bohrloch eingebracht und entsprechend justiert werden.

Ein weiterer Gegenstand der Erfindung ist daher die Verwendung des oben beschriebenen Zweikomponenten-Reaktionsharzes zur Befestigung von Ankergewindestangen, Bewehrungseisen, Gewindehülsen und Schrauben in Bohrlöchern beliebigen Untergrunds.

Die folgenden Beispiele dienen der weiteren Erläuterung der Erfindung.

### BEISPIEL 1

### Zweikomponenten-Reaktionsharz auf der Grundlage eines Urethanmethacrylats (UMA)

Man bereitet zunächst die A-Komponente eines Zweikomponenten-Reaktionsharzes dadurch, daß man 42,0 g der in der nachfolgenden Tabelle 1 angegebenen Harzkomponente (A) mit 20,0 g Zement, 36,0 g Quarzsand mit einer mittleren Korngröße von 0,4 mm und 2,0 g hydrophober pyrogener Kieselsäure in einem Dissolver unter Vakuum zu einer luftblasenfreien pastösen Masse homogenisiert. Diese Masse wird in eine Kartusche eingebracht.

Als B-Komponente des Zweikomponenten-Reaktionsharzes, also als Härterkomponente (B) verwendet man eine handelsübliche B-Komponente, bestehend aus einer wässrigen Benzoylperoxidsuspension, Quarzmehl und pyrogener Kieselsäure, mit einem Gesamt-Füllgrad von 60 Gew.-% und einem Peroxidgehalt von 7,5 Gew.-%, die ebenfalls in eine Kartusche eingebracht wird. Für die bestimmungsgemäße Anwendung werden die A-Komponente und die B-Komponente aus den Kartuschen ausgepresst und durch einen Statikmischer geführt, wodurch die Reaktion dieser Komponenten unter Aushärtung des Reaktionsharzes einsetzt. Die reagierende Masse wird in das Bohrloch eingespritzt, worauf das zu befestigende Teil eingeführt und justiert wird.

Die Bestimmung der Gelzeit der in dieser Weise erhaltenen Mischung aus den A- und B-Komponenten des Zweikomponenten-Reaktionsharzes erfolgt mit einer handelsüblichen Vorrichtung (Geltimer) bei einer Temperatur von 25°C. Hierzu werden die A- und die B-Komponente im Volumenverhältnis 3:1 aus einer Zweikomponentenkartusche über einen Statikmischer in ein auf 25°C temperiertes Reagenzglas bis ca. 4 cm unter den Rand eingebracht (DIN 16945, DIN EIN ISO 9396). Ein Glasstab oder eine Spindel wird mit 10 Hüben pro Minute in dem Harz auf- und abbewegt. Die Gelzeit ist die Zeit, bei der das Reagenzglas vom oszillierenden Stab angehoben wird. Der Aushärtegrad am Gelpunkt (gemessen mittels Differential-Scanning-Kalorimetrie (DSC)) ist, wie Stichproben zeigen, innerhalb der Meßgenauigkeit konstant.

Zur Bestimmung der Lastwerte der ausgehärteten Masse verwendet man eine Ankergewindestange M12, die in ein Bohrloch mit einem Durchmesser von 14 mm und einer Bohrlochtiefe von 72 mm mit dem erfindungsgemäßen Zweikomponenten-Reaktionsharz eingedübelt wird. Man ermittelt die mittlere Versagenslast durch zentrisches Ausziehen der Ankergewinde-stange mit enger Abstützung unter Verwendung hochfesten Ankergewinde-stangen. Es werden jeweils 5 Ankergewindestangen eingedübelt und nach 24 Stunden Aushärtung ihre Lastwerte bestimmt. Die hierbei ermittelten Lastwerte sind als Mittelwert in der nachfolgenden Tabelle 1 ebenfalls aufgeführt.

| **Tabelle 1** | | | |
|---|---|---|---|
| **Harzkomponente (A)** | **Vergleich** | **Erfindung** | **Erfindung** |
| | **UMA-REF** | **UMA-1** | **UMA-2** |
| | 4-tert.-Butylbrenzcatechin | 4-Methylbrenzcatechin | Brenzcatechin |
| Urethanmethacrylat-Oligomer, difunktionell [g] | 36,90 | 36,90 | 36,90 |
| Hydroxypropylmethacrylat [g] | 25,70 | 25,70 | 25,70 |
| Butandiol-1,4-dimethacrylat (g) | 26,50 | 26,50 | 26,50 |
| Trimethylolpropantrimethacrylat [g] | 7,95 | 7,95 | 7,95 |
| p-Toluidin (Beschleuniger) [g] | 2,31 | 2,31 | 2,31 |
| Mittel (b) Inhibitor [g] | 0,37 | 0,31 | 0,33 |
| Stabilisator [g] | 0,03 | 0,03 | 0,03 |
| | | | |
| **Gelzeit** [@ 25°C] | 06:10 | 05:26 | 05:01 |
| nach 28d 40°C [% vom Startwert] | 62 | 79 | 89 |
| nach 56d 40°C [% vom Startwert] | 51 | 67 | 88 |
| | | | |
| **Lastwerte** [kN] | | | |
| Referenz | 62,0 | 69,8 | 66,8 |
| -10°C | 57,3 | 62.5 | 61,4 |
| +40°C | 41.2 | 51,9 | 59,2 |
| Flb | 44,3 | 48,3 | 48,4 |
| | | | |

| | | | |
|---|---|---|---|
| ¹Piperidinyl-N-oxyl | | | |

Die in der obigen Tabelle bei den Lastwerten angegebenen Abkürzungen stehen für folgendes:

### Referenz: Trockenes, gereinigtes Bohrloch, Setzen der Ankergewindestange und Aushärten bei Raumtemperatur

| | |
|---|---|
| -10°C: | wie Referenz, aber Setzen der Ankergewindestange und Aushärten bei -10°C |
| +40°C: | wie Referenz, aber Setzen der Ankergewindestange und Aushärten bei +40°C |
| F1b: | halbgereinigtes und feuchtes Bohrloch, Setzen der Ankergewindestange und Aushärten bei Raumtemperatur. |

Wie die obige Tabelle erkennen läßt, zeigt das erfindungsgemäße Zweikomponenten-Reaktionsharz bei wesentlich geringerem Gelzeitdrift erheblich bessere Lastwerte, sowohl bei niedrigen als auch bei hohen Temperaturen, und auch bei halbgereinigten und feuchten Bohrlöchern und dies in Gegenwart von alkalisch reagierendem Aluminatzement.

### BEISPIEL 2

### Zweikomponenten-Reaktionsharz auf der Grundlage eines ethoxylierten Bisphenol-A-dimethacrylats (EBD)

Die Herstellung des Zweikomponenten-Reaktionsharzes erfolgt wie in der in Beispiel 1 beschriebenen Weise, ausgehend von der in der nachfolgenden Tabelle 2 angegebenen Bestandteile der Harzkomponente (A).

Die Aushärtung des Reaktionsharzes und die Bestimmung der Lastwerte erfolgen ebenfalls nach der in Beispiel 1 beschriebenen Weise. Die hierbei erhaltenen Ergebnisse sind in der nachfolgenden Tabelle 2 angegeben.

| **Tabelle 2** | | | |
|---|---|---|---|
| **Harzkomponente (A)** | **Vergleich** | **Erfindung** | **Erfindung** |
| | **EBD-REF** | **EBD-1** | **EBD-2** |
| | 4-tert.-Butylbrenzcatechin | 4-Methylbrenzcatechin | Brenzcatechin |
| EBD (Ethoxylierungsgrad = 2) [g] | 47,5 | 47,5 | 47,5 |
| EBD (Ethoxylierungsgrad = 4) [g] | 20 | 20 | 20 |
| Hydroxypropylmethacrylat [g] | 15 | 15 | 15 |
| Butandiol-1,4-dimethacrylat [g] | 15 | 15 | 15 |
| p-Toluidin (Beschleuniger) [g] | 2,3 | 2,3 | 2.3 |
| Mittel (b) Inhibitor [g] | 0,27 | 0.25 | 0,26 |
| Stabilisator¹ [g] | 0.03 | 0,03 | 0,03 |
| | | | |
| **Gelzeit** [@ 25°C] | 06:23 | 06:36 | 05:40 |
| nach 28d 40°C [% vom Startwert] | 69 | 82 | 87 |
| nach 56d 40°C [% vom Startwert] | 58 | 70 | 80 |
| | | | |
| **Lastwerte** [kN] | | | |
| Referenz | 61.4 | 69.1 | 68.6 |
| -10°C | 59,2 | 67,6 | 62,4 |
| +40°C | 42.2 | 53,2 | 56,2 |
| Flb | 42.3 | 43.4 | 43.3 |
| | | | |

| | | | |
|---|---|---|---|
| ¹Piperidinyl-N-oxyl | | | |

Dieses Beispiel belegt ebenfalls die überraschende Tatsache, daß die erfindungsgemäßen Zweikomponenten-Reaktionsharze eine deutlich verbesserte Stabilität der Gelzeit aufweisen und gegenüber dem Vergleichsharz zumindest eine gleichwertige, teilweise sogar bessere Leistung bei der Verwendung als Dübelmasse zur chemischen Befestigung von Ankergewindestangen aufweisen.

## Patentansprüche

1. Zweikomponenten-Reaktionsharz, mit einer Harzkomponente (A), die als härtbaren Bestandteil (a) mindestens eine radikalisch härtbare, ethylenisch ungesättigte Verbindung, ein Mittel (b) für die Einstellung der Reaktivität und der Gelzeit und mindestens ein Comonomer (c) enthält, und einer davon reaktionsinhibierend getrennt angeordneten Härterkomponente (B), die ein Härtungsmittel für das Harz der Harzkomponente (A) enthält, **dadurch gekennzeichnet, daß** die Harzkomponente (A) als Mittel (b) für die Einstellung der Reaktivität und der Gelzeit ein Brenzcatechinderivat der allgemeinen Formel (I): 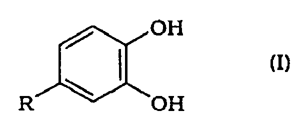 enthält, in der R ein Wasserstoffatom, eine gegebenenfalls hydroxy-, alkoxy-oder alkylamino-substituierte Methyl-, Ethyl-, n-Propyl-, iso-Propyl-, n-Butyl-oder iso-Butylgruppe, eine Gruppe der Formeln R₁OOC-, R₁O-, R₁NH- oder R₁R₂N-, worin R₁ und R₂ unabhängig voneinander gegebenenfalls hydroxysubstituierte Alkylgruppen mit 1 bis 4 Kohlenstoffatomen darstellen, eine Aldehydgruppe, eine Polyoxyalkylengruppe der Formel (II): 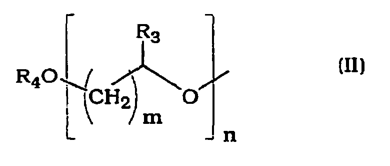 in der m eine ganze Zahl mit einem Wert von 1 bis 3, n eine ganze Zahl mit einem Wert von 1 bis 50, R₃ ein Wasserstoffatom oder eine Methylgruppe und R₄ ein Wasserstoffatom, eine Alkylgruppe mit 1 bis 4 Kohlenstoffatomen oder eine Gruppe der Formel (III): 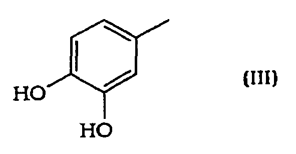 darstellen, bedeutet.

2. Reaktionsharz nach Anspruch 1, **dadurch gekennzeichnet, daß** die Harzkomponente (A) als Mittel (b) für die Einstellung der Reaktivität und der Gelzeit Brenzcatechin, 3,4-Dihydroxybenzaldehyd, 4-Methylbrenzcatechin und/oder 4-Methoxybrenzcatechin enthält.

3. Reaktionsharz nach Anspruch 1 oder 2, **dadurch gekennzeichnet, daß** das Mittel (b) für die Einstellung der Reaktivität und der Gelzeit in einer Menge von 100 ppm bis 2,0 Gew.-%, vorzugsweise 500 ppm bis 1,5 Gew.-% und noch bevorzugter von 1000 ppm bis 1,0 Gew.-%, bezogen auf den härtbaren Bestandteil (a), in der Harzkomponente (A) gelöst enthalten ist

4. Reaktionsharz nach den Ansprüchen 1 bis 3, **dadurch gekennzeichnet, daß** die Harzkomponente (A) als härtbaren Bestandteil (a) mindestens einen Vinylester der Formel (A-CH=CR₅-CO-O)ₙ-R, einen Vinylether der Formel (A-CH=CR₅-O)ₙ-R, einen Allylester der Formel (CH₂=CR₅-CH₂-CO-0)ₙ-R, einen Allylether der Formel (CH₂=CR₅-CH₂-O)ₙ-R, ein Vinylesterharz auf Grundlage von Bisphenol A, ein Vinylesterurethan-Harz oder ein Oligomer oder Prepolymer aus einem oder mehreren dieser Monomeren enthält, worin
A gleichartige oder verschiedene Wasserstoffatome oder Alkylgruppen mit 1 bis 3 Kohlenstoffatomen,
R eine geradkettige oder verzweigte aliphatische Gruppe mit 1 bis 20 Kohlenstoffatomen, die auch eine Cyclohexyl- oder 1,4-Dimethylencyclohexylgruppe und ein oder mehrere Sauerstoff- oder Schwefel-Atome enthalten und mit einer oder mehreren funktionellen Gruppen ausgewählt aus Hydroxygruppen und Aminogruppen und ein oder zwei Alkylgruppen mit 1 bis 3 Kohlenstoffatomen substituiert sein kann, eine Allylgruppe oder eine Vinylgruppe, oder R eine Polyethylenglykol- oder Polypropylenglykolgruppe mit einer mittleren Kettenlänge von 2 bis 120 Glykoleinheiten, die gegebenenfalls eine an die freie Hydroxylgruppe der Kette gebundene aliphatische Gruppe mit 1 bis 5 Kohlenstoffatomen aufweist,
R₅ Wasserstoff oder eine eine Alkylgruppe mit 1 bis 8 Kohlenstoffatomen und n 1, 2, 3 oder 4 bedeuten.

5. Reaktionsharz nach Anspruch 4, **dadurch gekennzeichnet, daß** die Harzkomponente (A) als härtbaren Bestandteil (a) Hydroxybutylvinylether, Diethylenglykoldivinylether, Triethylenglykoldivinylether, 3-Aminopropylvinylether, t-Amylvinylether, Butylvinylether, Cyclohexandimethanolmonovinylether, Cyclohexylvinylether, 3-Diethylaminopropylvinylether, Diethyleneglykolmonovinylether, Dodecyl-vinylether, Ethylenglykolbutylvinylether, Ethyleneglykolmonovinylether, 2-Ethylhexylvinylether, Ethylvinylether, Hexanediolmonovinylether, Hydroxybutylvinylether, Methylvinylether, Octadecylvinylether, Polyethylenglykol-520-methylvinylether, Triethylenglykcolmethylvinylether, Butandioldivinylether, Cyclohexandimethanol-divinylether, Diethylenglylcoldivinylether, Dipropylenglykoldivinylether, Ethylenglykoldivinylether, Hexandioldivinylether, Neopentylglykoldivinylether, Tetraethylenglykoldivinylether, Triethylenglylcoldivinylether, Trimethylolpropantrivinylether, Tripropylenglykoldivinylether, Pentaerythrittetravinylether, Allylether, Di(propylenglykol)allylether(meth)acrylat (Isomerenmischung), Diethylenglykolmonoallylether, Pentaerythritlallylether, Trimethylolpropanallylether, Trimethylolpropandiallylether, Allylbenzylether, Bisphenol-A-diallylether, Allylbutylether, Allylethylether, Allylglycidylether, Allylphenylether, Allylpropylether, Poly(epichlorohydrin-co-ethylenoxid-co-allylglycidylether). Ethylenglykolmonoallylether, Tetraethylenglykoldiallylether, ein ethoxyliertes Bisphenol-A-di(meth)acrylat mit einem Ethoxylierungsgrad von 2 bis 10, vorzugsweise von 2 bis 4, und/oder ein difunktionelles, trifunktionelles oder höherfunktionelles Urethan(meth)acrylat-Oligomer enthält.

6. Reaktionsharz nach den Ansprüchen 1 bis 5, **dadurch gekennzeichnet, daß** die Harzkomponente (A) als Comonomer (c) einen (Meth)acrylsäureester enthält.

7. Reaktionsharz nach Anspruch 6, **dadurch gekennzeichnet, daß** die Harzkomponente (A) als Comonomer (c) Hydroxypropyl(meth)acrylat, Butandiol-1,2-di(meth)acrylat, Trimethylolpropantri(meth)acrylat, 2-Ethylhexyl-(meth)acrylat, Phenylethyl-(meth)acrylat, Tetrahydrofurfuryl(meth)acrylat, Ethyltriglykol(meth)-acrylat, N,N-Dimethylaminoethyl(meth)acrylat, N,N-Dimethylaminomethyl(meth)-acrylat, 1,4-Butandioldi(meth)acrylat, Acetoacetoxyethyl-(meth)acrylat, 1,2-Ethandioldi(meth)acrylat, Isobornyl(meth)acrylat, Diethylenglykoldi(meth)acrylat, Methoxypolyethylenglykolmono(meth)acrylat, Trimethyl-cyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)-acrylat, Di-[(meth)acryloyl-maleoyl]-tricyclo-5.2.1.0.^{2.6}-decan, Dicyclopentenyloxyethylcrotonat, 3-(Meth)-acryloyl-oxymethyl-tricylo-5.2.1.0.^{2.6}-decan. 3-Methylcyclopentadienyl(meth)-acrylat, Isobornyl(meth)acrylat und/oder Decalyl-2-(meth)-acrylat enthält.

8. Reaktionsharz nach mindestens einem der Ansprüche 1 bis 7, **dadurch gekennzeichnet, daß** die Harzkomponente (A) einen Beschleuniger (d) für das Härtungsmittel enthält.

9. Reaktionsharz nach Anspruch 8, **dadurch gekennzeichnet, daß** die Harzkomponente (A) als Beschleuniger (d) ein aromatisches Amin und/oder ein Salz von Cobalt, Mangan, Zinn, Vanadium oder Cer enthält.

10. Reaktionsharz nach Anspruch 9, **dadurch gekennzeichnet, daß** die Harzkomponente (A) als Beschleuniger (d) N,N-Dimethylanilin, N,N-Diethylanilin. N,N-Di-isopropanol-p-toluidin, N,N-Diisopropyliden-p-toluidin, N,N-Dimethyl-p-toluidin. N,N-Diethylol-p-toluidin, N,N-Diisopropylol-m-toluidin, N,N-Bis(2-hydroxyethyl)-toluidin, N,N-Bis(2-hydroxyethyl)-xylidin, N-Methyl-N-hydroxyethyl-p-toluidin, Cobaltoctoat, Cobaltnaphthcnat, Vanadium(IV)-acetylacetonat und/oder Vanadium(V)-acetylacetonat enthält.

11. Reaktionsharz nach mindestens einem der vorhergehenden Ansprüche, **dadurch gekennzeichnet, daß** es in der Harzkomponente (A) und/oder der Härterkomponente (B) mindestens einen anorganischen Füllstoff enthält.

12. Reaktionsharz nach Anspruch 11, **dadurch gekennzeichnet, daß** als anorganischer Füllstoff Quarz, Glas, Korund, Porzellan, Steingut, Schwerspat, Leichtspat, Gips, Talkum und/oder Kreide in Form von Sanden, Mehlen oder Formkörpern, vorzugsweise in Form von Fasern oder Kugeln enthalten ist

13. Reaktionsharz nach mindestens einem der vorhergehenden Ansprüche, **dadurch gekennzeichnet, daß** die Härterkomponente (B) als Härtungsmittel mindestens ein organisches Peroxid, vorzugsweise Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat enthält.

14. Reaktionsharz nach mindestens einem der vorhergehenden Ansprüche, **dadurch gekennzeichnet, daß** die Harzkomponente (A) neben dem Harz zusätzlich noch eine hydraulisch abbindende oder polykondensierbare anorganisehe Verbindung und die Härterkomponente (B) neben dem Härtungsmittel zusätzlich noch Wasser enthält.

15. Reaktionsharz nach Anspruch 14, **dadurch gekennzeichnet, daß** die Harzkomponente (A) als hydraulisch abbindende oder polykondensierbare anorganische Verbindung Zement, vorzugsweise Aluminatzement, und/oder Gips enthält.

16. Reaktionsharz nach Anspruch 15, **dadurch gekennzeichnet, daß** die Harzkomponente (A) als Zement eisenoxidfreie oder eisenoxidarme Zemente enthält.

17. Reaktionsharz nach Anspruch 16, **dadurch gekennzeichnet, daß** die Harzkomponente (A) als polykondensierbare Verbindung silikatische, polykondensierbare Verbindungen, insbesondere lösliches, gelöstes und/oder amorphes SiO₂ enthaltende Stoffe enthält.

18. Patrone, Kartusche oder Folienbeutel, enthaltend ein Reaktionsharz nach mindestens einem der vorhergehenden Ansprüche, **dadurch gekennzeichnet, daß** sie zwei oder mehrere voneinander getrennte Kammern umfassen, in welchen das radikalisch härtbares Reaktionsharz bzw. das Härtungsmittel angeordnet sind.

19. Verwendung des Reaktionsharzes nach den Ansprüchen 1 bis 18 zur chemischen Befestigung von Ankergewindestangen, Bewehrungseisen, Gewindehülsen und Schrauben in Bohrlöchern.

## Claims

1. Two-component thermosetting resin, with a resin component (A) containing at least one radically curable, ethylenically unsaturated compound as the curable constituent (a), a means (b) for adjusting the reactivity and gel time, and at least one comonomer (c), and with a curing component (B) disposed separately therefrom in a reaction-inhibiting fashion and containing a curing agent for the resin of the resin component (A), **characterized in that** the resin component (A) contains a catechol derivative of the general formula (I): 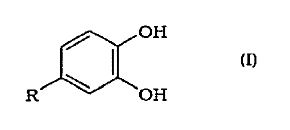 in which R stands for a hydrogen atom, an optionally hydroxy-, alkoxy- or alkylamino-substituted methyl, ethyl, n-propyl, iso-propyl, n-butyl or iso-butyl group, a group of the formulae R1OOC-, R1O-, R1 NH- or R1 R2N- wherein R1 and R2, independently of each other, denote optionally hydroxy-substituted alkyl groups with 1 to 4 carbon atoms, an aldehyde group, a polyoxyalkylene group of formula (II): 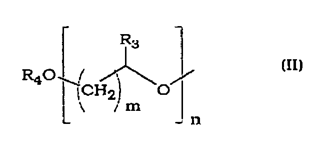 in which m denotes a whole number with a value of 1 to 3, n denotes a whole number with a value of 1 to 50, R3 denotes a hydrogen atom or a methyl group, and R4 denotes a hydrogen atom, an alkyl group with 1 to 4 carbon atoms, or a group of formula (III): 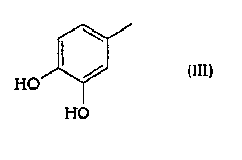 as the means (b) for adjusting the reactivity and gel time.

2. Thermosetting resin according to Claim 1, **characterized in that** the resin component (A) contains catechol, 3,4-dihydroxybenzaldehyde, 4-methylcatechol and/or 4-methoxycatechol as the means (b) for adjusting the reactivity and gel time.

3. Thermosetting resin according to Claim 1 or Claim 2, **characterized in that** the means (b) for adjusting the reactivity and gel time is contained in solution in the resin component (A) in a proportion of from 100 ppm to 2.0% by weight, preferably 500 ppm to 1.5% by weight, and still more preferably 1000 ppm to 1.0% by weight, to the curable constituent (a).

4. Thermosetting resin according to Claims 1 to 3, **characterized in that** the resin component (A) contains at least one vinyl ester of the formula (A-CH=CR5-CO-O)n-R, vinyl ether of the formula (A-CH=CR5-O)n-R, allyl ester of the formula (CH2=CR5-CH2-CO-O)n-R, allyl ether of the formula (CH2=CR5-CH2-O)n-R, vinyl ester resin based on bisphenol A, or vinyl ester urethane resin, or an oligomer or prepolymer consisting of one or more of these monomers, wherein
A stands for identical or different hydrogen atoms or alkyl groups with 1 to 3 carbon atoms,
R stands for a straight-chain or branched aliphatic group with 1 to 20 carbon atoms which also contains a cyclohexyl or 1,4-dimethylene cyclohexyl group and one or more oxygen or sulphur atoms and can be substituted with one or more functional groups selected from hydroxy groups and amino groups and one or two alkyl groups with 1 to 3 carbon atoms, an allyl group, or a vinyl group, or
R stands for a polyethylene glycol or polypropylene glycol group with a mean chain length of 2 to 120 glycol units, optionally comprising an aliphatic group with 1 to 5 carbon atoms bound to the free hydroxyl group of the chain,
R5 stands for hydrogen or an alkyl group with 1 to 8 carbon atoms, and
n stands for 1, 2, 3 or 4,
as the curable constituent (a).

5. Thermosetting resin according to Claim 4, **characterized in that** the resin component (A) contains hydroxybutyl vinyl ether, diethyleneglycol divinyl ether, triethyleneglycol divinyl ether, 3-aminopropyl vinyl ether, t-amyl vinyl ether, butyl vinyl ether, cyclohexane dimethanol monovinyl ether, cyclohexyl vinyl ether, 3-diethyl aminopropyl vinyl ether, diethyleneglycol monovinyl ether, dodecyl vinyl ether, ethyleneglycol butyl vinyl ether, ethyleneglycol monovinyl ether, 2-ethylhexyl vinyl ether, ethyl vinyl ether, hexane diol monovinyl ether, hydroxybutyl vinyl ether, methyl vinyl ether, octadecyl vinyl ether, polyethyleneglycol-520-methyl vinyl ether, triethyleneglycol methyl vinyl ether, butane diol divinyl ether, cyclohexane dimethanol divinyl ether, diethyleneglycol divinyl ether, dipropyleneglycol divinyl ether, ethyleneglycol divinyl ether, hexane diol divinyl ether, neopentylglycol divinyl ether, tetraethyleneglycol divinyl ether, triethyleneglycol divinyl ether, trimethylolpropane trivinyl ether, tripropyleneglycol divinyl ether, pentaerythritol tetravinyl ether, allyl ether, di(propyleneglycol)allyl ether (meth)acrylate (isomeric mixture), diethyleneglycol monoallyl ether, pentaerythritol allyl ether, trimethylolpropane allyl ether, trimethylolpropane diallyl ether, allyl benzyl ether, bisphenol A diallyl ether, allyl butyl ether, allyl ethyl ether, allyl glycidyl ether, allyl phenyl ether, allyl propyl ether, poly(epichlorohydrin-co-ethylene oxide-co-allyl glycidyl ether), ethyleneglycol monoallyl ether, tetraethyleneglycol diallyl ether, an ethoxylated bisphenol A di(meth)acrylate with a degree of ethoxylation of from 2 to 10, preferably 2 to 4, and/or a difunctional, trifunctional or higher-functional urethane (meth)acrylate oligomer, as the curable constituent (a).

6. Thermosetting resin according to Claims 1 to 5, **characterized in that** the resin component (A) contains a (meth)acrylic acid ester as the comonomer (c).

7. Thermosetting resin according to Claim 6, **characterized in that** the resin component (A) contains hydroxypropyl (meth)acrylate, butanediol-1,2-di(meth)acrylate, trimethylolpropane tri(meth)acrylate, 2-ethyl hexyl (meth)acrylate, phenyl ethyl (meth)acrylate, tetrahydrofurfuryl (meth)acrylate, ethyl triglycol (meth)acrylate, N,N-dimethylaminoethyl (meth)acrylate, N,N-dimethylaminomethyl (meth)acrylate, 1,4-butanediol di(meth)acrylate, acetoacetoxyethyl (meth)acrylate, 1,2-ethanediol di(meth)acrylate, isobomyl (meth)acrylate, diethyleneglycol di(meth)acrylate, methoxypolyethyleneglycol mono(meth)acrylate, trimethyl-cyclohexyl (meth)acrylate, 2-hydroxyethyl (meth)acrylate, dicyclopentenyloxyethyl (meth)acrylate and/or tricyclopentadienyl di(meth)acrylate, bisphenol A (meth)acrylate, novolac epoxy di(meth)acrylate, di-[(meth)acryloyl-maleoyl]-tricyclo-5.2.1.0.^2.6-decane, dicyclopentenyloxyethyl crotonate, 3-(meth)-acryloyl-oxymethyl-tricyclo-5.2.1.0.^2.6-decane, 3-(methylcyclopentadienyl (meth)acrylate, isobornyl (meth)acrylate, and/or decalyl-2-(meth)acrylate, as the comonomer (c).

8. Thermosetting resin according to at least one of Claims 1 to 7, **characterized in that** the resin component (A) contains an accelerator (d) for the curing agent.

9. Thermosetting resin according to Claim 8, **characterized in that** the resin component (A) contains an aromatic amine and/or a salt of cobalt, manganese, tin, vanadium or cerium as the accelerator (d).

10. Thermosetting resin according to Claim 9, **characterized in that** the resin component (A) contains N,N-dimethylaniline, N,N-diethylaniline, N,N-di-isopropanol-p-toluidine, N,N-diisopropylidene-p-toluidine, N,N-dimethyl-p-toluidine, N,N-diethylol-p-toluidine, N,N-diisopropylol-m-toluidine, N,N-bis(2-hydroxyethyl)-toluidine, N,N-bis(2-hydroxyethyl)-xylidine, N-methyl-N-hydroxyethyl-p-toluidine, cobalt octoate, cobalt naphthenate, vanadium(IV)-acetyl acetonate, and/or vanadium(V)-acetyl acetonate, as the accelerator (d).

11. Thermosetting resin according to at least one of the preceding claims, **characterized in that** it contains at least one inorganic filler in the resin component (A) and/or in the curing component (B).

12. Thermosetting resin according to Claim 11, **characterized in that** quartz, glass, corundum, porcelain, earthenware, heavy spar, light spar, gypsum, talc and/or chalk, in the form of sand, flour or formed bodies, preferably fibres or spheres, is contained as the inorganic filler.

13. Thermosetting resin according to at least one of the preceding claims, **characterized in that** the curing component (B) contains at least one organic peroxide, preferably dibenzoyl peroxide, methylethylketone peroxide, tert.-butyl perbenzoate, cyclohexanone peroxide, lauryl peroxide, cumolhydroperoxide and/or tert.-butylperoxy-2-ethyl hexanoate as the curing agent.

14. Thermosetting resin according to at least one of the preceding claims, **characterized in that** the resin component (A) contains a hydraulically binding or polycondensable inorganic compound in addition to the resin, and the curing component (B) contains water in addition to the curing agent.

15. Thermosetting resin according to Claim 14, **characterized in that** the resin component (A) contains cement, preferably aluminate cement, and/or gypsum, as the hydraulically binding or polycondensable inorganic compound.

16. Thermosetting resin according to Claim 15, **characterized in that** the resin component (A) contains iron-oxide-free or low-iron-oxide cements as the cement.

17. Thermosetting resin according to Claim 16, **characterized in that** the resin component (A) contains silica-based polycondensable compounds, in particular substances containing soluble, dissolved and/or amorphous silica, as the polycondensable compound.

18. Cartridge, canister or sachet containing a thermosetting resin according to at least one of the preceding claims, **characterized in that** it comprises two or more separate chambers in which the radically curable thermosetting resin and curing agent are respectively disposed.

19. Use of the thermosetting resin according to Claims 1 to 18 for the chemical fixing of anchor bolts, reinforcing bars, threaded sleeves and bolts in bore holes.

## Revendications

1. Résine de réaction à deux composants comprenant un composant de résine (A), qui comprend en tant qu'élément durcissable (a) au moins une liaison insaturée éthylénique durcissable, un agent (b) pour l'ajustement de la réactivité et le temps de gélification et au moins un comonomère (c), et un composant durcisseur (B) disposé séparément pour inhiber la réaction, qui comporte un agent durcisseur pour la résine du composant de résine (A), **caractérisée en ce que** le composant de résine (A) comprend comme agent (b) pour l'ajustement de la réactivité et du temps de gélification un dérivé de pyrocatéchine de formule générale (I) : 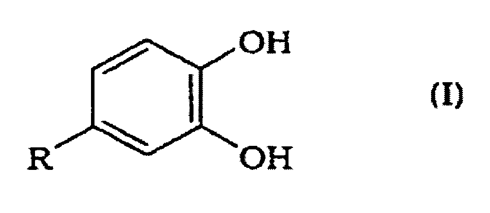 dans laquelle R représente un atome d'hydrogène, le cas échéant un groupe méthyle, éthyle, n-propyle, iso-propyle, n-butyle ou iso-butyle substitué par un groupe hydroxy, alkoxy ou alkylamino, un groupe de formule R₁OOC-, R₁O-, R₁NH- ou R₁R₂N-, où R₁ et R₂ représentent, le cas échéant, indépendamment l'un de l'autre des groupes alkyles avec 1 à 4 atomes de carbone substitués par un groupe hydroxy, un groupe aldéhyde, un groupe polyoxyalkylène de formule (II) : 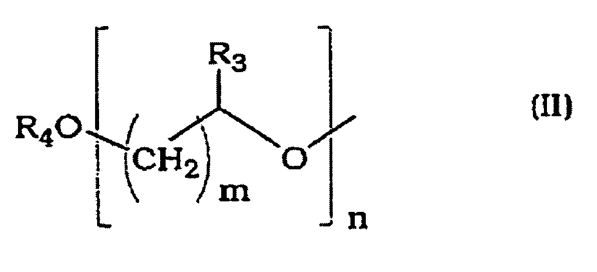 dans laquelle m représente un nombre entier avec une valeur de 1 à 3, n représente un nombre entier avec une valeur de 1 à 50, R₃ représente un atome d'hydrogène ou un groupe méthyle et R4 représente un atome d'hydrogène, un groupe alkyle avec 1 à 4 atomes de carbone ou un groupe de formule (III) :

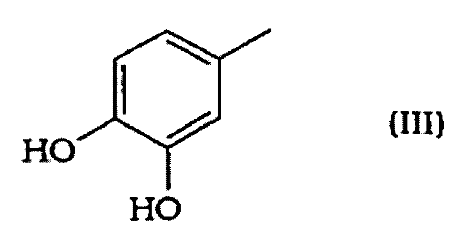

2. Résine de réaction selon la revendication 1, **caractérisée en ce que** le composant de résine (A) comprend comme agent (b) pour l'ajustement de la réactivité et du temps de gélification de la pyrocatéchine, le 3,4-dihydroxybenzaldéhyde, la 4-méthylpyrocatéchine et/ou la 4-méthoxypyrocatéchine.

3. Résine de réaction selon la revendication 1 ou 2, **caractérisée en ce que** l'agent (b) destiné à l'ajustement de la réactivité et du temps de gélification est contenu sous forme dissoute dans le composant de résine (A) dans une quantité de 100 ppm à 2,0 % en poids, de préférence de 500 ppm à 1,5 % en poids et de manière davantage préféré de 1000 ppm à 1,0 % en poids relative à l'élément durcissable (a).

4. Résine de réaction selon les revendications 1 à 3, **caractérisée en ce que** le composant de résine (A) comporte en tant qu'élément durcissable (a) au moins un ester vinylique de formule (A-CH=CR₅-CO-O)ₙ-R, un éther vinylique de formule (A-CH=CR₅-O)ₙ-R, un ester allylique de formule (CH₂=CR₅-CH₂-CO-O)ₙ-R, un éther allylique de formule (CH₂=CR₅-CH₂-O)ₙ-R, une résine d'ester vinylique à base de bisphénol A, une résine d'uréthane d'ester vinylique ou un oligomère ou un prépolymère composé d'un ou plusieurs de ces monomères, où A comporte des atomes d'hydrogène similaires ou différents ou des groupes alkyles avec 1 à 3 atomes d'hydrogène,
R comporte un groupe en chaîne linéaire ou aliphatique ramifié avec 1 à 20 atomes de carbones, qui comprennent également un groupe cyclohexyle ou 1,4-diméthylcyclohexyle et un ou plusieurs atomes d'oxygènes ou de soufre et qui peut être substitué par un ou plusieurs groupes fonctionnels sélectionnés parmi les groupes hydroxy et les groupes amino et un ou plusieurs groupes alkyles possédant 1 à 3 atomes de carbones, un groupe allyle ou un groupe vinyle, ou
R représente un groupe polyéthylèneglycol ou polypropylèneglycol avec une longueur de chaîne moyenne de 2 à 120 unités de glycol, qui le cas échéant présente un groupe aliphatique possédant 1 à 5 atomes de carbones qui est lié au groupe hydroxyle libre de la chaîne,
R₅ représente un hydrogène ou un groupe alkyle avec 1 à 8 atomes de carbones et n représente 1, 2, 3 ou 4.

5. Résine de réaction selon la revendication 4, **caractérisée en ce que** le composant de résine (A) comporte en tant qu'élément durcissable (a) de l'hydroxybutylvinyléther, le diéthylèneglycoldivinyléther, le *triéthylèneglycoldivinyléther, le 3-*aminopropylvinyléther, le t-amylvinyléther, le butylvinyléther, le cyclohexanediméthanolmonovinyléther, le cyclohexylvinyléther, le 3-diéthylaminopropylvinyléther, le diéthylèneglycolmonovinyléther, le dodécylvinyléther, l'éthylèneglycolbutylvinyléther, l'éthylèneglycolmonovinyléther, le 2-éthylhexylvinyléther, l'éthylvinyléther, l'hexanediolmonovinyléther, l'hydroxybutylvinyléther, le méthylvinyléther, l'octadécylvinyléther, le polyéthylèneglycol-520-méthylvinyléther, le triéthylèneglycolméthylvinyléther, le butandioldivinyléther, le cyclohexanediméthanoldivinyléther, le diéthylèneglycoldivinyléther, le dipropylèneglycoldivinyléther, l'éthylèneglycoldivinyléther, l'hexandioldivinyléther, le néopentylglycoldivinyléther, tétraéthylèneglycoldivinyléther, triéthylèneglycoldivinyléther, le triméthylolpropanetrivinyléther, le tripropylèneglycoldivinyléther, le pentaérythritetétravinyléther, l'éther allylique, le di(propylèneglycol)allyléther(méth)acrylat (mélange d'isomères), le diéthylèneglycolmonoallyléther, le pentaérythriteallyléther, le triméthylolpropanallyléther, triméthylolpropandiallyléther, l'allylbenzyléther, le bisphénol-A-diallyléther, l'allylbutyléther, l'allyléthyléther, l'allylglycidyléther, l'allylphényléther, l'allylpropyléther, le poly(épichlorohydrine-co-oxyde d'éthylène-co-allylglycidyléther), l'éthylèneglycolmonoallyléther, le tétraéthylèneglycoldiallyléther, un diméthacrylate de bisphénol A éthoxylé avec un degré d'éthoxylation de 2 à 10, de préférence de 2 à 4 et/ou un oligomère d'uréthane(méth)acrylate difonctionnel, trifonctionnel ou de fonction plus élevée.

6. Résine de réaction selon les revendications 1 à 5, **caractérisée en ce que** le composant de résine (A) comprend un ester de l'acide méthacrylique en tant que comonomère (c).

7. Résine de réaction selon la revendication 6, **caractérisée en ce que** le composant de résine (A) comporte en tant que comonomère (c) l'hydroxypropyl(méth)acrylate, le butandiol-1,2-di(méth)acrylate, le triméthylolpropanetri(méth)acrylate, le 2-éthylhexyl(méth)acrylate, le phényléthyl(méth)acrylate, le tétrahydrofurfuryl(méth)acrylate, l'éthyltriglycol(méth)acrylate, le N,N-diméthylaminoéthyl(méth)acrylate, le N,N-diméthylaminométhyl(méth)acrylate, le 1,4-butandioldi(méth)acrylate, l'acétoacétoxyéthyl-(méth)acrylate, le 1,2-éthanedioldi(méth)acrylate, l'isobornyl(méth)acrylate, le diéthylèneglycoldi(méth)acrylate, le méthoxypolyéthylèneglycolmono(méth)acrylate, le tri-méthyl-cyclohexyl(méth)acrylate, le 2-hydroxyéthyl(méth)acrylate, le dicyclopentenyloxyéthyl(méth) acrylate et/ou le tricyclopentadiényldi(méth)acrylate, le bisphénol-A-(méth)acrylate, le novolaque époxydi(méth)acrylate, le di-((méth)acryloyle-maléoyle)-tricyclo-5.2.1.0^{2,6}-décane, le dicyclopentenyloxyéthylcrotonate, le 3-(méth)acryloyl-oxyméthyl-tricyclo-5.2.1.0^{2,6}-décane, le 3-méthylcyclopentadiényl(méth)-acrylate, l'isobornyl(méth)acrylate et/ou le décalyl-2-(méth)acrylate.

8. Résine de réaction selon au moins l'une des revendications 1 à 7, **caractérisée en ce que** le composant de résine (A) contient un accélérateur (d) destiné à l'agent durcisseur.

9. Résine de réaction selon la revendication 8, **caractérisée en ce que** le composant de résine (A) contient en tant qu'accélérateur (d) une amine aromatique et/ou un sel de cobalt, de manganèse, d'étain, de vanadium ou de cérium.

10. Résine de réaction selon la revendication 9, **caractérisée en ce que** le composant de résine (A) contient en tant qu'accélérateur (d) la N,N-diméthylaniline, la N,N-diéthylaniline, la N,N-di-isopropanol-p-toluidine, la N,N-diisopropylidène-p-toluidine, la N,N-di-méthyl-p-toluidine, la N,N-diéthylol-p-toluidine, la N,N-diisopropylol-m-toluidine, le N,N-bis(2-hydroxyéthyl)-toluidine, la N,N-bis(2-hydroxyéthyl)-xylidine, la N-méthyl-N-hydroxyéthyl-p-toluidine, l'octoate de cobalt, le naphténate de cobalt, l'acétylacétonate de vanadium (IV) et/ou l'acétylacétonate de vanadium (V).

11. Résine de réaction selon au moins l'une des revendications précédentes, **caractérisée en ce que** le composant de résine (A) et/ou le composant durcisseur (B) contient au moins une matière de remplissage inorganique.

12. Résine de réaction selon la revendication 11, **caractérisée en ce qu'**elle contient comme matière de remplissage inorganique du quartz, du verre, du corindon, de la porcelaine, du grès, de la baryte, du sulfate de calcium, du gypse, du talc et/ou de la craie sous forme de sables, de farines ou de corps de moule, de préférence sous forme de fibres ou de boules.

13. Résine de réaction selon au moins l'une des revendications précédentes, **caractérisée en ce que** le composant durcisseur (B) comporte comme agent durcisseur au moins un peroxyde organique, de préférence le dibenzoylperoxyde, le peroxyde de méthyléthylcétone, le tert.-butylperbenzoate, le peroxyde de cyclohexanone, le peroxyde laurique, le cumolhydroperoxyde et/ou le tert. butylperoxy-2-éthylhexanoate.

14. Résine de réaction selon au moins l'une des revendications précédentes, **caractérisée en ce que** le composant de résine (A) comporte en outre, en plus de la résine, un composé à prise hydraulique ou polycondensable inorganique et le composant durcisseur (B) contient en outre, en plus de l'agent durcisseur, de l'eau.

15. Résine de réaction selon la revendication 14, **caractérisée en ce que** le composant de résine (A) contient en tant que composé à prise hydraulique ou polycondensable inorganique du ciment, de préférence du ciment alumineux et/ou du gypse.

16. Résine de réaction selon la revendication 15, **caractérisée en ce que** le composant de résine (A) contient en tant que ciment, du ciment sans oxyde de fer ou pauvre en oxyde de fer.

17. Résine de réaction selon la revendication 16, le composant de résine (A) contient en tant que composé polycondensable des composés polycondensables siliceux, en particulier des substances solubles, dissoutes et/ou contenant du SiO₂ amorphe.

18. Capsules, cartouches ou sachets en plastique contenant une résine de réaction selon au moins l'une des revendications précédentes, **caractérisés en ce qu'**ils comprennent deux ou plusieurs compartiments séparés l'un de l'autre, dans lesquels on dispose la résine de réaction radicalement durcissable ou l'agent durcisseur.

19. Utilisation de la résine de réaction selon les revendications 1 à 18 pour fixer chimiquement des tiges filetées d'ancrage, des ronds à béton armé, des douilles filetées et des vis dans des trous percés au foret.
